# EUROPEAN PATENT APPLICATION

(11) **EP 1 122 645 A1**
(43) Date of publication of application: **08.08.2001**
(21) Application number: 98941867.8
(22) Date of filing: 14.09.1998
(51) Int. Cl.: G06F 11/10, G06F 12/16

(54) **METHOD OF DIAGNOSING A MEMORY FAILURE AND RECOVERING DATA, AND A MEMORY DEVICE USING THIS METHOD**

(71) Applicant: FUJITSU LIMITED, Kawasaki-shi, Kanagawa 211-8588 (JP)
(72) Inventor: LIN, Chung-hsiung, Fujitsu Digital Tech. Ltd, Yokohama-shi, Kanagawa 222-0033 (JP); MORIMOTO, Shigeru, Fujitsu Limited, Kawasaki-shi, Kanagawa 211-8588 (JP)
(74) Representative: HOFFMANN - EITLE
(86) International application number: JP9804139
(87) International publication number: WO0016198

(57) **Abstract**

In a memory apparatus using a versatile memory device having no parity function, a memory apparatus fault diagnostic function is implemented with which a written data fault diagnosis is made and upon the memory apparatus faults the data are restorable as much as possible. Input data are parity operated, encoded in a predetermined correlation, and stored in a first address of one memory. The data stored in the first address are then read and the read data are parity operated. The result of the parity operation of the read data is compared with the result of the parity operation of the input data stored in the second address. When a coincidence occurs as a result of this comparison, the data read from the first address are output as valid, whereas when a non-coincidence occurs as a result of this comparison, the encoded data read from the second address are decoded for output.

## Description

### TECHNICAL FIELD

The present invention relates to a memory fault diagnosis and data restoration method for detecting faults in a memory apparatus for use in a transmitter, an information processor, etc., and to a memory apparatus using the method.

### BACKGROUND ART

Recent transmitters or information processors tend to use memory apparatuses having large-capacity memory devices, with their increased data processing speed. Accordingly, errors may typically occur upon data when written to or read out from the memory apparatus. It is then envisaged that the error occurrence rate of the memory apparatus is proportional to a memory device capacity.

For this reason, it is necessary to confirm that data are correctly recorded when read out from the large-capacity memory device, so as to prevent propagation of the read-out error data.

As one method for making a fault diagnosis for the memory apparatus in the prior art, the following algorithm is effected: When data are stored, a parity operation is made for the write-in data, and the operational results are simultaneously written into the memory device together with the data. When the data are read out, the parity operation is again made for the output data, so that the parity information when reading is compared with the parity information when written in which is read out together with the data. In the case where the arithmetic results are different, such diagnostic results are transmitted to a corresponding alarm collection portion to indicate a fault of the memory apparatus.

In such a method for diagnosing a memory device in the prior art, for example, the case that each input data is composed of 8 bits is considered as an embodiment. The parity operation is made in 8-bit input data, and as the results, 1-bit parity information is generated. Accordingly, information to be written into the memory device includes 9 bits in total of 8-bit data and 1-bit parity information.

Here, when the using memory device has an input terminal for 9 bits or more, the data and parity are simultaneously written into the same memory device, and are checked when reading. However, in the case where the memory device has an input terminal for only 8 bits, the data information can be written in, but the fault diagnosing parity bit cannot be written. In such a case, it becomes necessary that another memory for writing the parity bit is further prepared.

When reading, the parity operation is made for the read-out data to compare with the parity written in, thereby enabling a fault diagnosis of the memory.

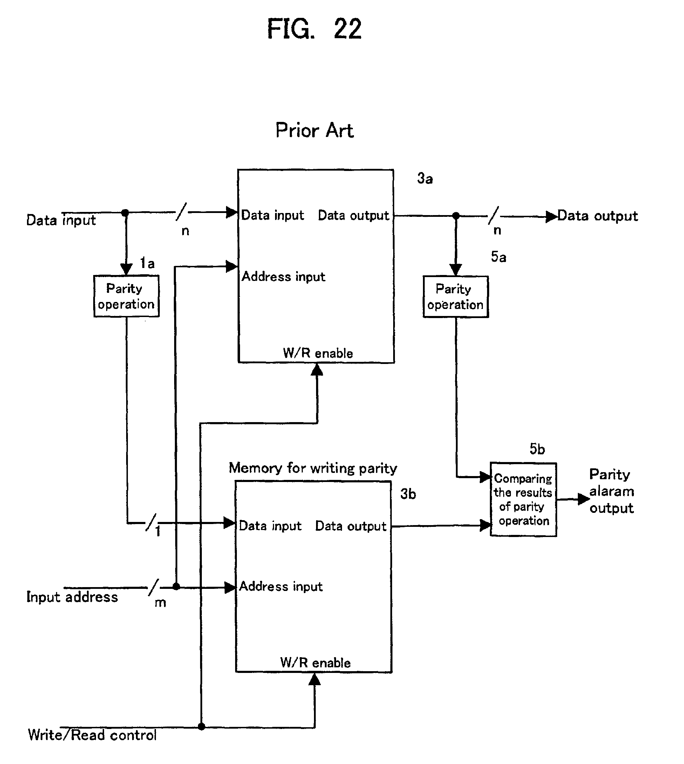

Fig. 22 is a block diagram showing one example of a circuit using a method for making a fault diagnosis of the memory device. This configuration corresponds to a case where the input terminal of a memory device is provided for only input data bits. Accordingly, the memory device has a data write memory 3a and additionally a parity write memory 3b.

In order to make the fault diagnosis, the memory device has a parity operation part 1a on an input side and a parity operation part 5a on an output side of the data write memory 3a. Furthermore, the memory device has a parity result comparison part 5b for comparing an output of the parity operation part 5a with an output of the parity write memory 3b.

With such a configuration, n-bit parallel input data are written in the data write memory 3a according to a corresponding input address. At the same time, the parity operation for the input data is made in the parity operation part 1a. The parity operation results are written in the parity write memory 3b as parity information according to the input address.

On the other hand, when the input data written in are read out from the data write memory 3a, the input data are read out from the data write memory 3a according to the input address, and the parity operation is made in the parity operation part 5a. The results of the parity operation in this parity operation part 5a are input to the parity result comparison part 5b together with the parity information read out from the parity write memory 3b according to the input address.

The parity result comparison part 5b compares both the inputs with each other, and judges presence or absence of a fault of the memory apparatus, and in the case of presence of the fault, the effect is output as an alarm.

However, for the method of making the fault diagnosis in the memory apparatus having the above assumed configuration, it is difficult to obtain any commercially available versatile memory device, which can receive the 9-bit data.

On the other hand, if the memory receiving 9 bit or more bit data is used, an unused memory space exists, and a problem arises in terms of mounting efficiency and reliability.

Furthermore, with the aforesaid configuration, if a separate memory device is used for storing the parity information, since only 1 bit, which corresponds to the parity information is used similarly, a plurality of unused memory spaces exist.

Furthermore, in the above assumed diagnostic method for the memory apparatus, it is possible to discover faults of the memory apparatus, but it is impossible to restore damaged data portions. Then, as a method for preventing missing of data due to the faults of the memory apparatus, it may be considered that the number of memory devices is increased doubly, and if one side fails, the normal data is read out from an auxiliary memory device.

However, in addition to the memory device for the parity information, the auxiliary memory device has to be also prepared. Accordingly, a necessary memory capacity is doubled, thereby leading to circumstances such as a lack of a mounting area, an increase in a consumption power, or the like.

### SUMMARY OF THE INVENTION

In light of the above situations, it is an object of the present invention to provide a memory fault diagnosis and data restoration method for implementing a memory apparatus fault diagnosis function having the equivalent diagnosis function to the parity check, the memory apparatus using a memory device readily available at low prices which has no parity information storage space, and to provide a memory apparatus using the method.

It is another object of the present invention to provide a memory fault diagnosis and data restoration method for implementing a memory apparatus fault diagnosis function diagnosing written data faults and enabling the data to be restored as much as possible upon the memory apparatus faults, the memory apparatus using a versatile memory device having no parity function, and to provide a memory apparatus using the method.

In the method for diagnosing a memory fault and restoring data; and the memory apparatus using the same for attaining the objects of the present invention, a parity operation is made for input data, and the input data are encoded in a predetermined correlation, and are stored in a first address of one memory. Furthermore, the results obtained by making the parity operation for the input data and the encoded data are stored in a second address of the one memory. When reading, the data stored in the first address are read out and the parity operation is made for the read-out data, and the results obtained by making the parity operation for the read-out data are compared with those obtained by making the parity operation for the input data stored in the second address. By this comparison, when coinciding with each other, the data read out from the first address are output as validity, and by this comparison, when non-coinciding with each other, the data read-out from the second address and encoded are decoded for to output.

According to an aspect, in the above configuration, the first address is configured by combining a predetermined bit count of address with one polarity bit of one clock, and the second address is configured by combining the predetermined bit count of address with a polarity bit counter to the one polarity of the one clock.

According to another aspect, the one polarity bit of the one clock and the polarity bit counter to the first polarity of the one clock in combination with the predetermined bit count of address are affixed to the uppermost bit of the predetermined bit count of address.

According to a further aspect, the one polarity bit of the one clock and the polarity bit counter to the first polarity of the one clock in combination with the predetermined bit count of address are affixed to the lowermost bit of the predetermined bit count of address.

According to yet another aspect, the encoding the input data in a predetermined correlation includes selecting an even-numbered parity group or an odd-numbered parity group, of code patterns corresponding to the bit count making up the input data, depending on the results of the parity operation of the input data.

According to a yet further aspect, the encoding the input data in a predetermined correlation includes selecting, for each upper half bit count and each lower half bit count of a bit count making up the input data, an even-numbered parity group or an odd-numbered parity group of corresponding code patterns in correspondence with the results of each parity operation of the upper half bit count and the lower half bit count, the encoding the input data further including combining the code patterns in correspondence with each of the upper half bit count selected and the lower half bit count selected.

The objects and features of the present invention will become apparent from the description of the embodiment of the invention with reference to the drawings which follow.

### BRIEF DESCRIPTION OF DRAWINGS

Fig. 1 shows the a configuration of a writing circuit in a conceptual configuration of a memory fault diagnosis and data restoration method, and memory apparatus using the same according to a first embodiment of the present invention;
Fig. 2 is a reading circuit configuration in a conceptual configuration of the method for diagnosing memory faults and restoring data; and the memory apparatus using the same according to the first embodiment of the present invention;
Fig. 3 is a block diagram of the write circuit of the memory apparatus in correspondence with Fig. 1 according to the detailed embodiment of the present invention;
Fig. 4 is a diagram for explaining a generation of a parity and a generation of a code value according to a detailed configuration example of a parity/code generation part 1 in the configuration of Fig. 3;
Fig. 5 is a diagram (No. 1) for explaining the parity generation and code generation;
Fig. 6 is a diagram (No. 2) for explaining the parity generation and code generation;
Fig. 7 is a diagram for further explaining a process of encoding the input data according to the embodiment of the present invention;
Fig. 8 is a diagram for explaining an input data write address region of a memory device 4 according to the embodiment of the present invention;
Fig. 9 is a timing chart when writing according to the embodiment of the present invention;
Fig. 10 is a block diagram of the write circuit according to a second embodiment of the present invention;
Fig. 11 is a diagram for explaining a data write address region in correspondence with Fig. 8 according to the second embodiment of the present invention;
Fig. 12 is a block diagram of a read-out circuit in correspondence with the first embodiment according to the second embodiment of the present invention;
Fig. 13 is a block diagram of configuration examples of a data truth or falsehood judgement part 7 and a data restoration/output data selection part 8;
Fig. 14 is a diagram for explaining an even number/odd number decoder;
Fig. 15 is a diagram for explaining an algorithm of judging whether the input data are an even-numbered parity or an odd-numbered parity;
Fig. 16 is a timing chart of the read-out circuit of Fig. 13 according to the embodiment of the present invention;
Fig. 17 is an operational flowchart in correspondence with Fig. 16;
Fig. 18 is a block diagram of the read-out circuit according to the embodiment of the present invention;
Fig. 19 is a diagram for explaining a system configuration to which memory apparatus according to the present invention is applied;
Fig. 20 is a diagram for explaining positioning of a cross-connector in the system configuration of Fig. 19;
Fig. 21 is a diagram for explaining a function of the cross-connector in the system configuration of Fig. 19; and
Fig. 22 is a block diagram showing one example of a circuit using the conventional method which makes a fault diagnosis for the memory device.

### PREFERRD EMBODIMENTS OF THE PRESENT INVENTION

Embodiments of the present invention will now be described in detail with reference to the drawings.

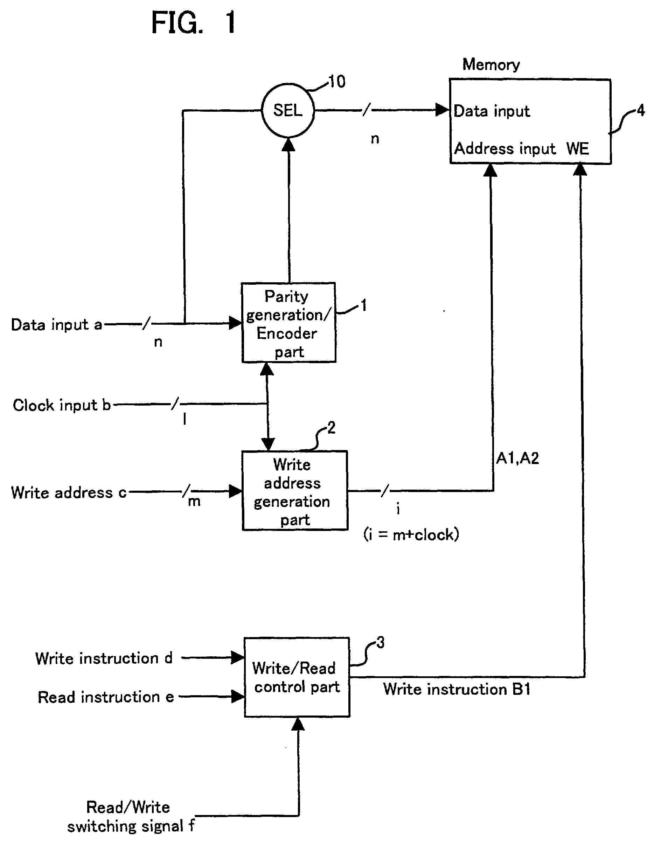

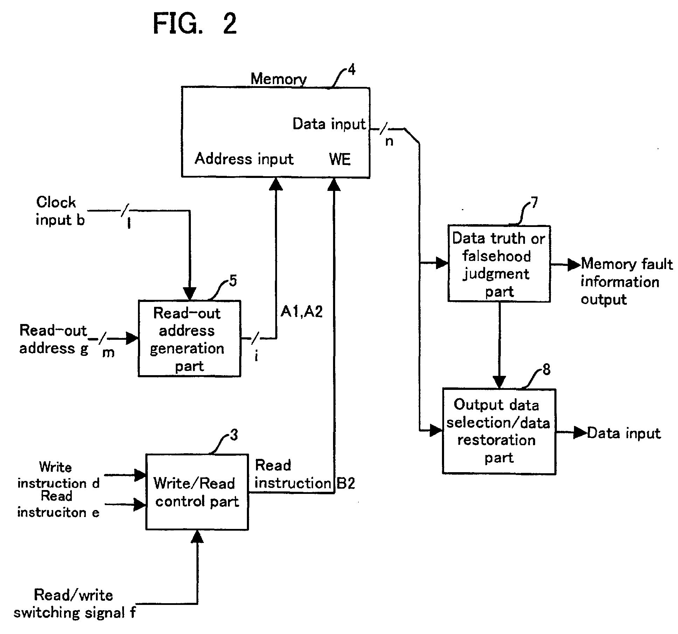

Figs. 1 and 2 are block diagrams showing a conceptual configuration of a method for diagnosing memory faults and restoring data; and a memory apparatus using the same according to a first embodiment of the present invention.

Fig. 1 shows a writing circuit configuration, and Fig. 2 shows a reading circuit configuration.

In Figs. 1 and 2, the memory apparatus has one memory device 4. In the writing circuit of Fig. 1, a parity generation/encoder part 1 makes a parity operation and a code generation with respect to n-bit parallel input data a.

A write address generation part 2 generates a first extension write address A1 when a clock b is in "H," based on the clock b in synchronism with the input data a or a write address c.

A write/read control part 3 switches an external write instruction d or read instruction e according to a read/write switching signal f, and outputs it as a write instruction B1 and a read instruction B2, respectively.

Accordingly, the external data input a is written into an address position of the memory device 4 which corresponds to the first extension write address A1 when the write instruction B1 from the write/read control part 3 generates.

Furthermore, when the clock b is in "L," the write address generation part 2 generates a second extension write address A2, and writes a parity value and code information generated by the parity generation/encoder 1 into an address position of the memory device 4 in correspondence with the second extension write address A2 according to the write instruction B1 from the write/read control part 3 and the second extension write address A2.

Incidentally, in Fig. 1, a selector 10 is a circuit for selecting the input data a, or the parity value and encoding information of parity operation results from the parity generation/encoder part 1, and leading to a data input terminal of the memory device 4.

As described above, with the configuration of the write circuit of Fig. 1, the input data a are written into the memory device 4 according to the first extension address A1.

Furthermore, the parity value and encoding information of parity operation results are written in the memory device 4 according to the second extension write address A2. Thus, the parity operation results and the encoding information can be stored in the same memory device 4 together with the input data a.

Next, in the reading circuit configuration of Fig. 2, first, a read-out address generation part 5 uses the clock b in synchronism with the input data a or a read-out address g, and when the clock b is in "H," the read-out address generation part 5 generates the first extension write address A1, and when the clock b is in "L," it generates the second extension write address A2.

According to the read/write switching signal f, when reading, the read instruction B2 is output from a write/read control part 6. Here, it is necessary that the write address coincides with the read address. Accordingly, the read-out address generation part 5 generates the first extension write address A1 from the read-out address g when the clock b is in "H," and reads out the input data a written in the first extension write address A1 of the memory device 4.

On the other hand, the read-out address generation part 5 generates the second extension write address A2 from the read-out address g when the clock b is in "L," and reads out the parity and encoding information written in the second extension write address A2 of the memory device 4.

A parity operation is made for the read data read out from the first extension address A1 by a data truth or falsehood judgment part 7. The results of the parity operation are compared with parity information read out further from the second extension address A2 by the data truth or falsehood judgment part 7. As the results of comparison, in the case where the results of parity operation of the read data are different, a parity alarm is output as memory fault information from the data truth or falsehood judgment part 7.

Furthermore, an output data selection/data restoration part 8 restores code values read out from the second extension write address A2 of the memory device 4 to original data. In the case where a parity alarm output derived from the data truth or falsehood judgment part 7 has no alarms, the output data selection/data restoration part 8 judge that the read data read out from the first extension write address A1 are correct. The read data are selected and output from the output data selection/data restoration part 8.

On the other hand, in the case where a parity alarm output derived from the data truth or falsehood judgment part 7 has any alarms, code values read out from the second extension write address A2 are restored by the output data selection/data restoration part 8, thereby selecting intrinsic data to output.

With the above configuration, according to the results of the party operation of the data read out from the first extension write address A1 of the memory device 4, the judgment of the truth or falsehood of the data is made. At the same time, the encoding information read out from the second extension address A2 of the memory device 4 is restored as the original data. In the case where the results of the parity operation are different, a parity error is detected and a parity alarm is output.

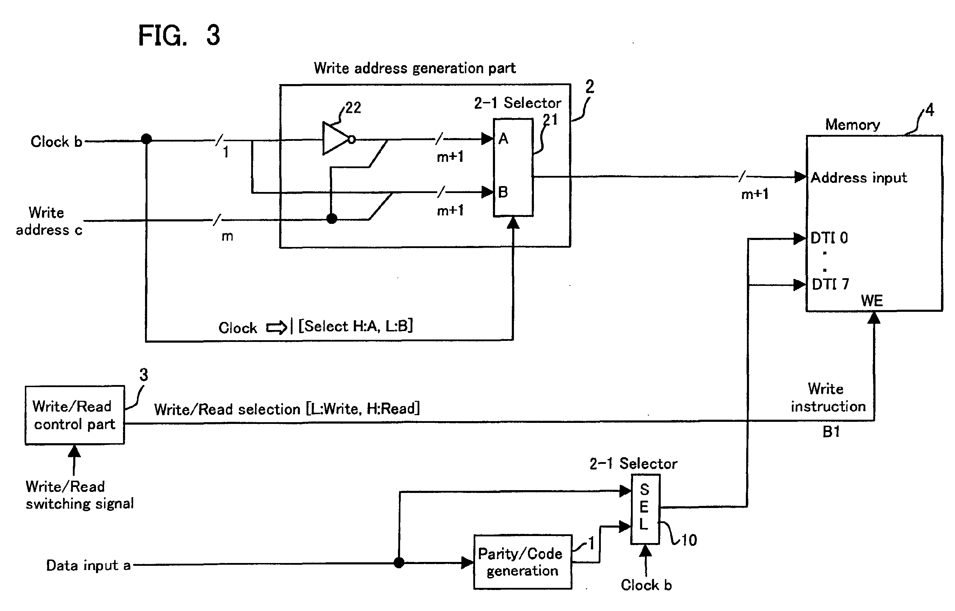

Fig. 3 is a block diagram of a write circuit of the memory apparatus in correspondence with Fig. 1, according to he detailed embodiment of the present invention. In Fig. 3, according to the embodiment, the input data a are considered to be 8-bit parallel data of (DT0 to DT7).

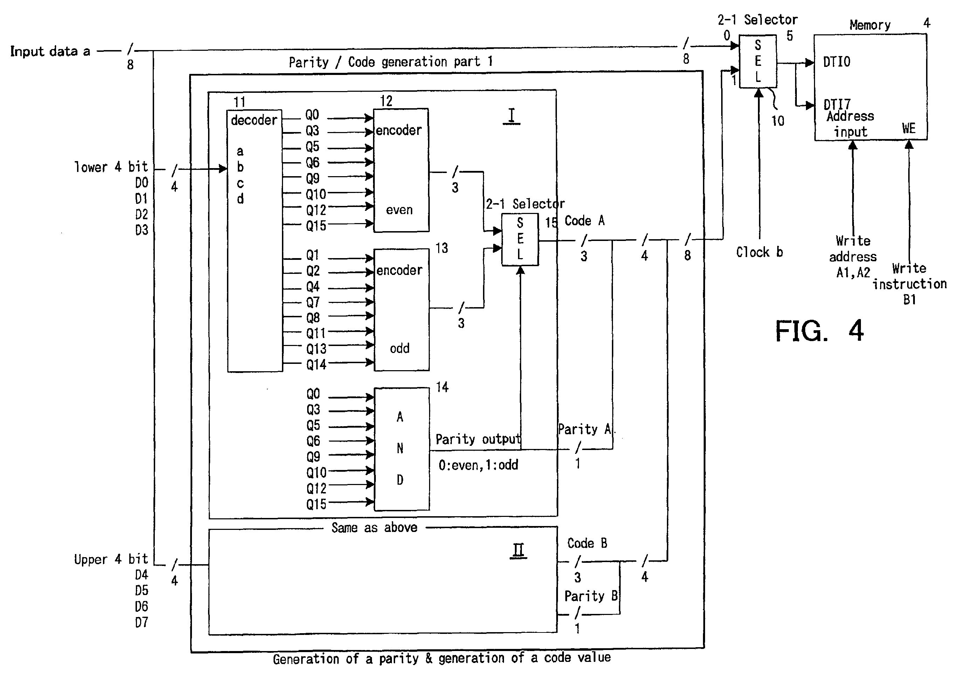

The parity/code generation part 1, which makes a parity arithmetic operation has a function of making a parity and encoding for upper 4 bits and lower 4 bits of the input data a, respectively. The detailed configuration example will be described later in Fig. 4.

The write address generation part 2 has a selector 21 having an alternative selection function (mentioned as 2-1) and an inverter 22. Similarly to the selector 21, the selector 10 is a selector having the 2-1 function, and selects any one of the data containing parity information and encoding information from the parity/code generation part 1 and the input data (DT0 to DT7) a at a timing of the clock signal b thereof.

The input data a are fetched into the parity/code generation part 1, and the parity operation and code generat on are made for the input data a. The clock signal b in synchronism with the input data a is input to the write address generation part 2. In the write address generation part 2, the input clock signal b is affixed to the uppermost bit of the m-bit write address as it stands. Then, the (m+1) bits are fetched into an input terminal B of the selector 21 as the first extension write address A1.

At the same time, a polarity of the clock signal b is inverted by the inverter 22, and the inverted clock signal b is affixed to the uppermost bit of the write address to be fetched into an input terminal A of the selector 21 as the second extension write address A2 of (m+1) bits.

When the clock signal b is high, the selector 21 selects the first extension write address A1, and when low, the selector 21 selects the second extension write address A2 to output, and it is input to an address input terminal of he memory device 4. On the other hand, when the clock signal b is high, the second selector 10 selects the input data a, and when low, the second selector 10 selects output data from the parity/code generation part 1.

The input data a are written into the memory device 4 according to the write instruction (write enable) B1 from he write/read control part 3 and the first extension write address A1, while the parity and the code information obtained from the parity/code generation part 1 are written into the memory 4 according to the write instruction B1 and the second extension write address A2.

Fig. 4 is a diagram for explaining a generation of a parity and a generation of a code information according to a detailed configuration example of the parity/code generation part 1 in the configuration of Fig. 3

In the parity/code generation part 1, 8 bits (DT0 to DT7) of the input data a are divided into lower 4 bits (DT0 to DT3) and upper 4 bits (DT4 to DT7), and each part is processed in parallel in a first processing circuit I and a second processing circuit II of the same configuration.

Incidentally, in the embodiment in which 8 bits of the input data a are divided into lower 4 bits and upper 4 bits, an operation thereof will be described below, and it is also possible according to the present invention that the input data a are encoded without being divided.

The 4-bit division is due to an easiness to procure the device for realizing the processing circuit, and accordingly, when the data input a is 16 bits, quartering is possible.

That is, Fig. 4 shows only the first processing circuit for the lower 4 bits (DT0 to DT3) in the parity/code generation part 1. Contents of the process for the lower 4 bits (DT0 to DT3) will be described below, and the second processing circuit for the upper 4 bits (DT4 to DT7) has also the similar configuration.

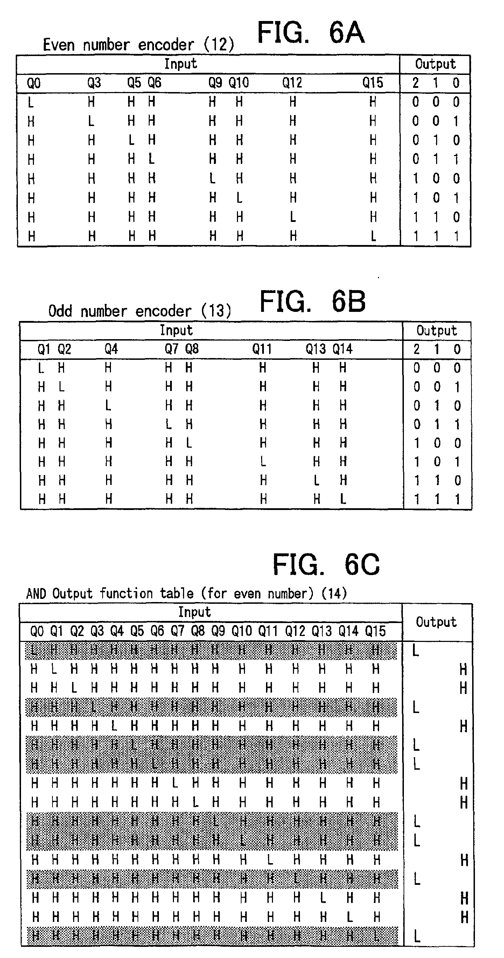

An even number encoder 12 inputs signals Q0, Q3, Q5, Q6, Q9, Q10, Q12, Q15, and generates 8 types of code shown in an even number encoder table shown in Fig. 6A to output.

On the other hand, an odd number encoder 13 inputs signals Q1, Q2, Q4, Q7, Q8, Q11, Q13, Q14, and generates 8 types of code shown in an odd number encoder table shown in Fig. 6B to output.

In Fig. 4, each 3-bit output of the even number encoder 12 and the odd number encoder 13 is input to a selector 15.

On the other hand, an AND circuit 14 of the first processing circuit I inputs 8 signals Q0, Q3, Q5, Q6, Q9, Q10, Q12, Q15 in which the output is in "L" only when the lowe 4 bits (DT0 to DT3) have an even-numbered parity. When "L" is detected in at least one of these 8 signals, it is understood that the lower 4 bits (DT0 to DT3) have the even-numbered parity. An output of the AND circuit 4 is in "L."

Accordingly, in the case where the lower 4 bits (DT0 to DT3) have an odd-numbered parity, since Q0, Q3, Q5, Q6, Q9, Q10, Q12, Q15 are never in "L," the output of the AND circuit 14 is in "H."

In the case where the lower 4 bits (DT0 to DT3) have the even-numbered parity, the output of the AND circuit 14 is in an output "L," and a code from the even number encoder 12 is selected, and in the case where the lower 4 bits (DT0 to DT3) have the odd-numbered parity, the output of the AND circuit 14 is in an output "H," and a code from the odd number encoder 13 is selected

In the same second processing circuit II, the same processing is performed even for the upper 4 bits (DT4 to DT7). Accordingly, information of 8 bits in total is obtained by adding up the lower 4 bits of 4 bits in total of [code A (3 bits) + parity A] from the first processing circuit I and he upper 4 bits of 4 bits in total of [code B (3 bits) + parity B] from the second processing circuit II, and is output to the selector 10.

The selector 10 selects any one of data containing parity information and code information from the parity/code generation part 1 and input data (DT0 to DT7). Namely, the selector 10 selects the input data a when the clock signal b is high, and selects the output data from the parity/code generation part 1 when low, and outputs them to the memory device 4.

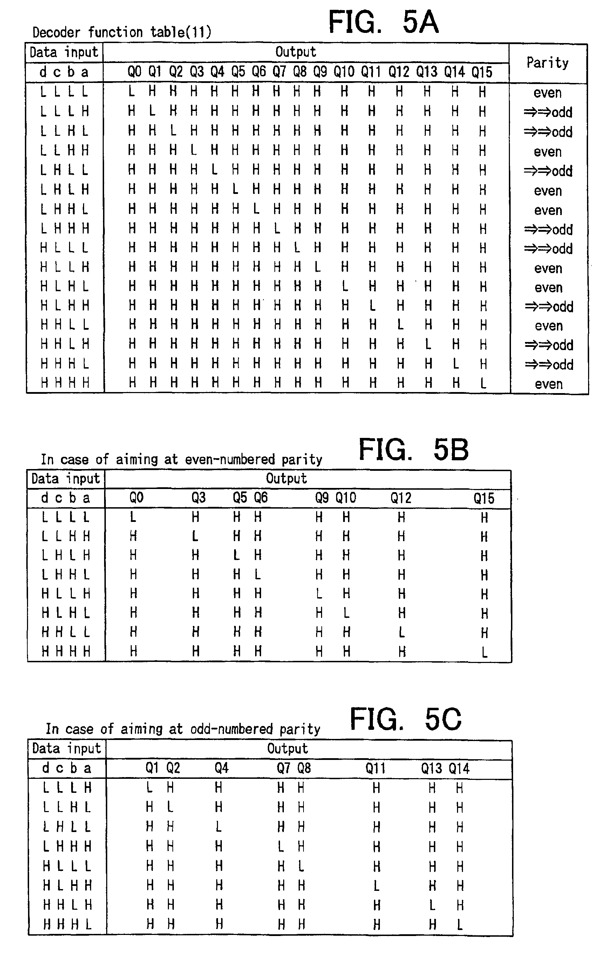

Figs. 5A-5C and 6A-6C are diagrams for explaining the parity generation and the code generation according to the embodiment of the present invention. Figs. 5A-5C are diagrams (No. 1) for explaining the parity generation and code generation. Fig. 5A is a decoder function table, which shows an output truth value of a decoder 11. A decode output is operated so as to set only one output information to be in "L" out of 16 pieces of output information in total of Q0 to Q15 in correspondence with each of the 4-bit inputs a to d.

That is, as shown in the decoder function table of Fig. 5A by the input decoder 11, in correspondence with each combination of 16 types of the lower 4 bits (DT0 to DT3), 16-bit patterns of Q0 to Q15 are output.

An even number encoder 12 inputs only the signals Q0, Q3, Q5, Q6, Q9, Q10, Q12, Q15 in which the output is in 'L" only when the lower 4 bits (DT0 to DT3) have the even-numbered parity out of the outputs from the decoder 11. Fig. 5B shows this relationship.

On the other hand, an odd number encoder 13 inputs only the signals Q1, Q2, Q4, Q7, Q8, Q11, Q13, Q14 in which the output is in "L" only when the lower 4 bits (DT0 to DT3) have the odd-numbered parity out of the outputs from the decoder 11. Fig. 5C shows this relationship.

Figs. 6A-6C are diagrams (No. 2) for explaining the parity generation and the code generation. The even number encoder 12 inputs the signals Q0, Q3, Q5, Q6, Q9, Q10, Q12, Q15, and generates 8 types of code shown in the even number encoder table shown in Fig. 6A to output.

Fig. 6A is an even number encoder table. According to such the even number encoder table, the even number encoder 12 collects the outputs to be in "L" when bits of 4-bit even-numbered parity are input into the decoder 11, and outputs 3-bit codes based thereon.

In like manner, Fig. 6B is an odd number encoder table, and the odd number encoder 13 collects the outputs to be in "L" when bits of 4-bit odd-numbered parity are input into the decoder 11, and outputs 3-bit codes based thereon.

Furthermore, Fig. 6C is an AND output function table, and explains a function of an AND circuit 14. The AND circuit 14 aims at the inputs of the even number encoder 12, and gathers only the signals to be in "L" when having the even-numbered parity, and outputs an "L" logic.

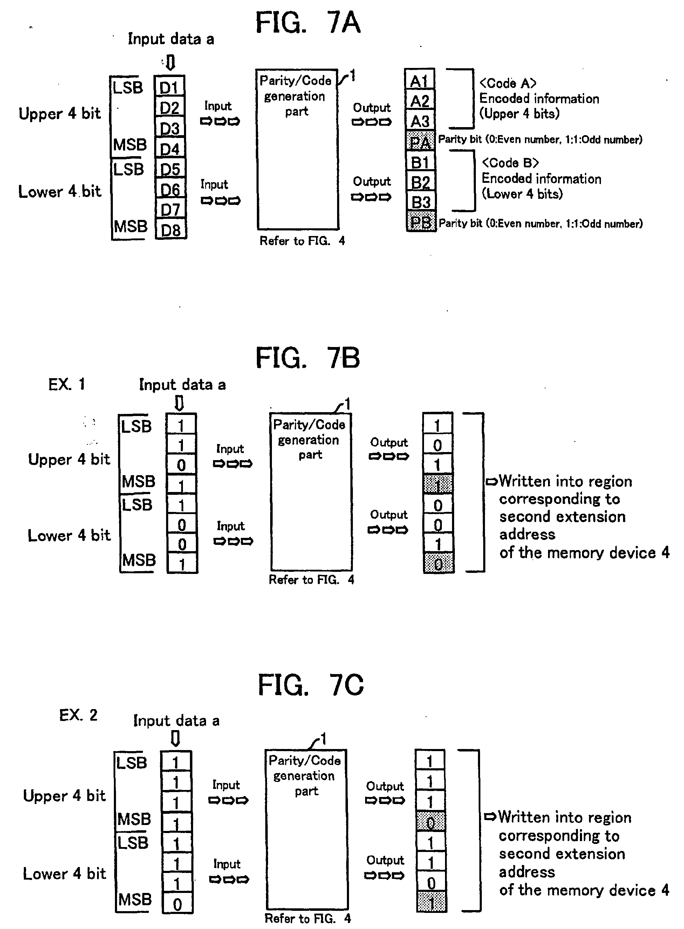

Figs. 7A-7C are diagrams for further explaining a process of encoding the input data according to the embodiment of the present invention. In Fig. 7A, the input data a have upper 4 bits (D1 to D4) and lower 4 bits (D5 to D8), and each data is input to the parity/code generation part 1.

The upper 4 bits are converted into code A information (A1, A2, A3) and parity information (PA), and the lower 4 bits are converted into code B information (B1, B2, B3) and parity information (PB). Accordingly, the parity information (PA, PB) which do not exist intrinsically in the input data a are generated, and are written into a region corresponding to the second extension address A2 of the memory device 4.

Fig. 7B is an example of the input data a 11011001. The upper 4 bits are 1101, and accordingly it is understood from the decoder function table of Fig. 5A that they have the odd-numbered parity. The output of the odd number encoder 13 of Fig. 6B at this time is 101. Thereby, as shown in Fig. 7B, 1011 is output in correspondence with the upper 4 bits 1101 of the input data a.

In like manner, in Fig. 7B, in correspondence with the lower 4 bits 1001 when in the example of the input data a 11011001, 0010 is output from the parity/code generation part 1. Fig. 7C is an example of the input data a 11111110, and in like manner 11101101 is output from the parity/code generation part 1.

These 10110010 in the example of Fig. 7B as the output of the parity/code generation part 1 and 11101101 in the example of Fig. 7C are written into a region in correspondence with the second extension address A2 of the memory device 4.

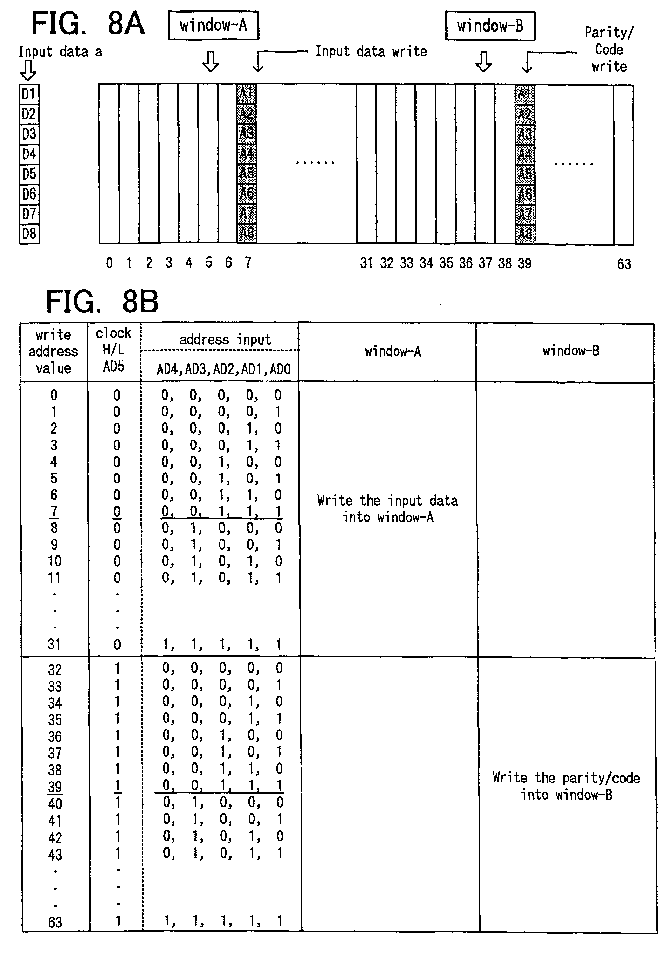

Figs. 8A and 8B are diagrams for explaining an input data write address region of the memory device 4 according to the embodiment of the present invention. In Figs. 8A and 8B, the description will be made assuming that the write address is a 7^{th} one configured with 5 bits.

In Fig. 8A, according to the first extension write address to be generated by affixing as an uppermost address bit of the write address when the clock b in synchronism with the input data a is high, the input data a are written into the memory device 4 (Window-A region). On the contrary, according to the second extension write address to be generated by affixing as an uppermost address bit of the write address when the clock b is low, the parity and code values obtained from the parity/code generation part 1 are written into the memory device 4 (Window-B region).

In Fig. 8B, the write address is a 7^{th} one (bit string: 00111), and when the clock b is high, after passing the inverter 22, as AD 5 bits are 0, the first extension write address is the 7^{th} one as it stands (bit string: 000111).

On the other hand, when the clock is low, after passing the inverter 2, as AD 5 bits as "1" are affixed to the write address (bit string: 00111), the second extension write address is a 39^{th} one (bit string: 100111).

Accordingly, the input data a are written into the 7^{th} address as the first extension write address, and the parity and code are written into the 39^{th} address as the second extension write address.

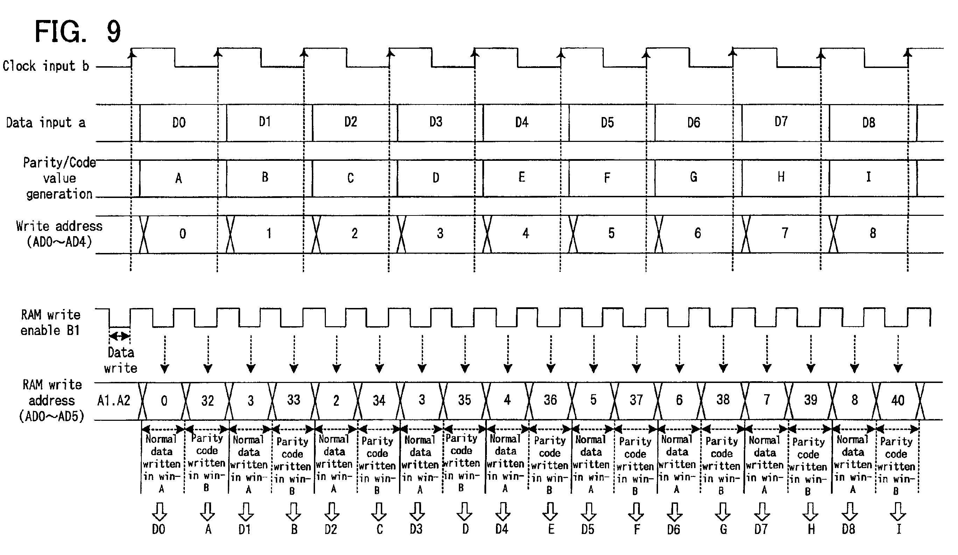

Fig. 9 is a timing chart when writing according to the embodiment of the present invention, and the description will be made with reference to Fig. 9.

In conformity to a cycle of the clock b, the parity and code values are generated by the input data a (in Fig. 9, A, B, C, ...). An H or L logic of the clock b in synchronism with the input data a is affixed as the upper bit (AD5) of the write addresses (AD0 to AD4).

On the other hand, the H or L logic of the clock b is affixed to the upper bit (AD5) of the write address (AD0 to AD4) by inverting the L logic. Accordingly, two RAM write addresses (AD0 to AD5) A1, A2 are generated as the first and second extension write addresses.

Accordingly, the input data a and the parity/code are written into the memory device (RAM) 4 according to the two RAM write addresses A1, A2, and the write instruction (RAM write enable) B1.

A region designated by the first extension write address generated by building in the write address when the clock b is high is called WINDOW-A, and a region designated by the second extension write address generated by building in the write address when the clock b is low is called WINDOW-B, which are shown in Figs. 8B and 9. Even in the following drawings, the regions are mentioned as WINDOW-A (WIN-A) and WINDOW-B (WIN-B) as occasion demands.

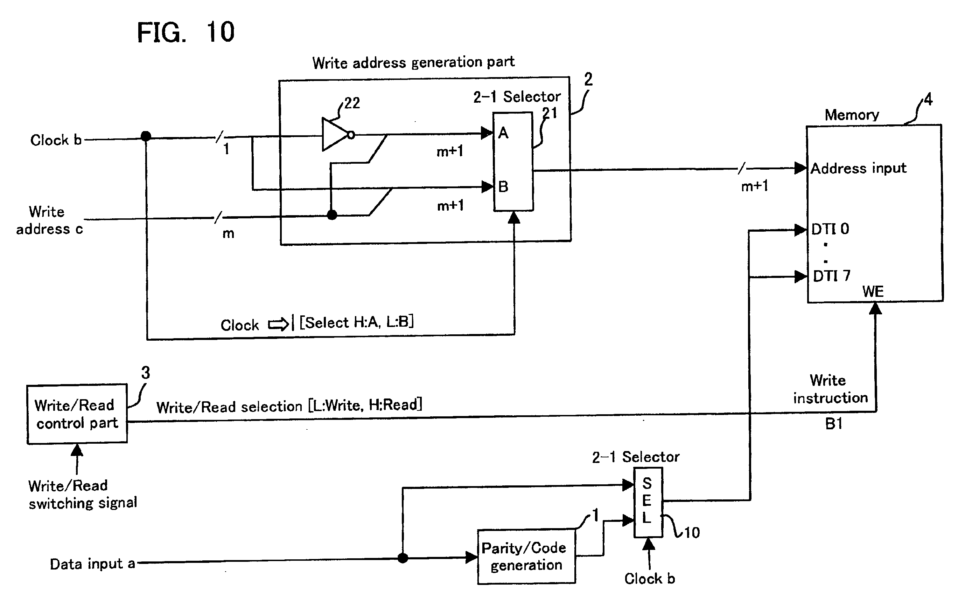

Fig. 10 is a block diagram of the write circuit according to a second embodiment of the present invention. This second embodiment differs from the first embodied configuration shown in Fig. 3 in that, in the write address generation block diagram, 1 or 0 bit in correspondence with the "H" or "L" logic of the clock b is affixed to the write address c as the lowermost bit. The other configuration and operation are same with that of Fig. 3.

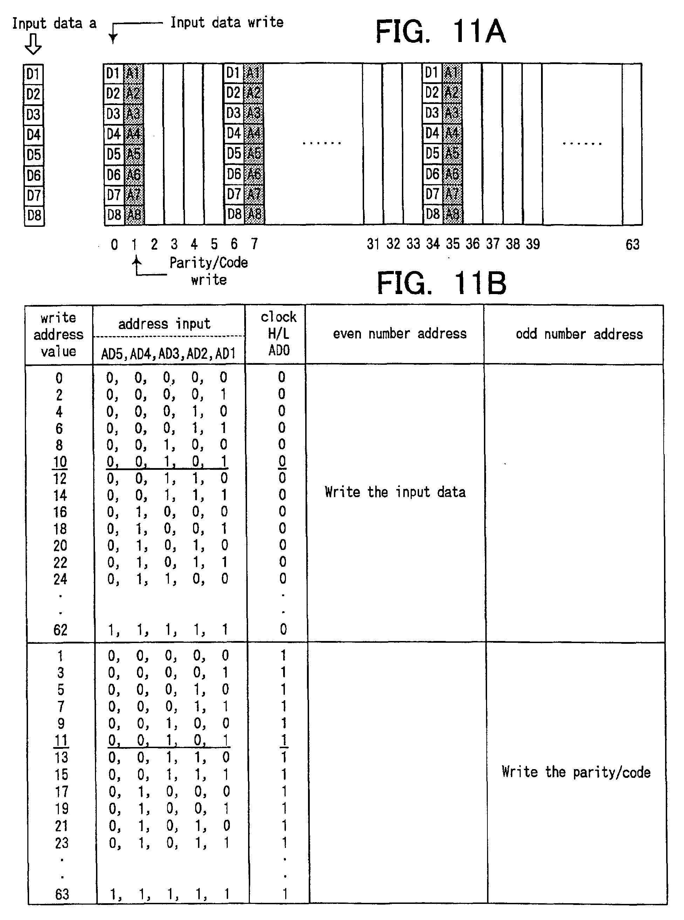

Figs. 11A,11B are diagrams for explaining a data write address region according to the second embodiment of the present invention, in correspondence with Figs. 8A,8B, which illustrate the data write address region according to the first embodiment. In Figs. 11A,11B, the description is made assuming that the write address c is a 5^{th} one.

In Figs. 11A,11B, according to the first extension write address generated by affixing as the lowermost address bit of the write address c when the lock b in synchronism with the input data a is high, and the second extension write address generated by affixing as the lowermost address bit of the write address c when the lock b is low, the parity and code values are obtained from the input data a and the parity/code generation part 1. The example in which they are written into the memory device 4 is described.

The write address c is a 5^{th} one (bit string: 00101), and when the clock is high, after passing the inverter 22, AD0 bit is 0. Therefore, as shown in Fig. 11B, the first extension write address is a 10^{th} one (bit string: 001010).

On the other hand, in the second extension write address, when the clock b is low in the write address c, after passing the inverter 22, AD0 bit is 1. Accordingly, the second extension write address is a 11^{th} one (bit string: 001011).

In like manner, accordingly, the input data a are written in the 10^{th} address as the first extension write address, and the parity and code are written into the 11^{th} address as the second extension write address. Additionally, as shown in Fig. 11A, the input data a, parity, and code are stored in continuous addresses.

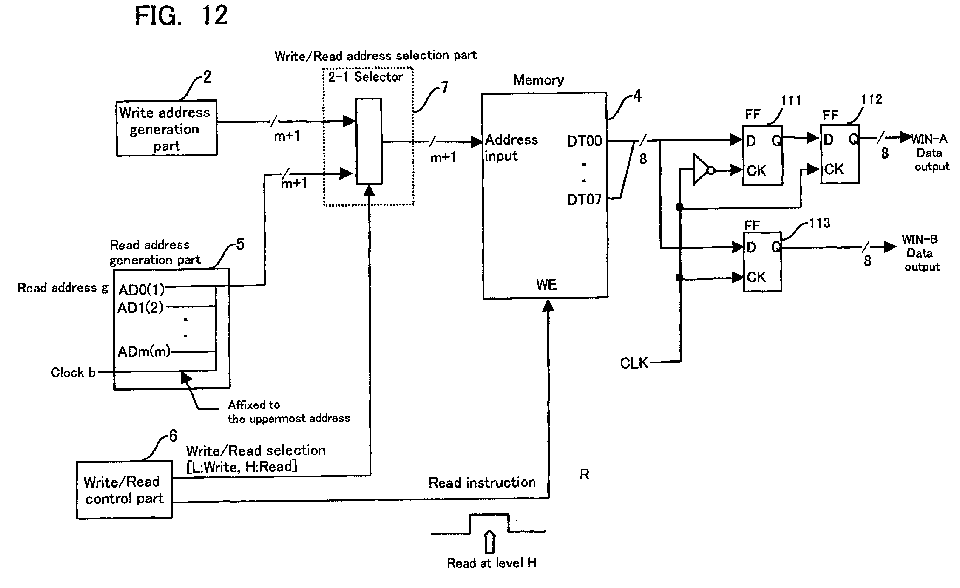

Fig. 12 is a block diagram of a read-out circuit in correspondence with the first embodiment according to the second embodiment of the present invention.

In Fig. 12, the write/read address selection part 7 selects outputs of the read-out address generation part 5 and the write address generation part 2 shown in Fig. 3 according to a read instruction signal R from a write/read control part 6 to output. That is, the write/read address selection part 7 selects the extension write addresses A1, A2 from the write address generation part 2 when the read instruction signal R is low, and the extension read-out address from the read-out address generation part 5 when the read instruction signal R is high.

The read-out address generation part 5 affixes the clock b to the uppermost bit of the read-out address g, and generates the first extension read address A1 when this clock is low, and the second extension read address A2 when the clock b is high.

Data in correspondence with the first extension address are read out from the memory device 4 based on the first extension read address A1 according to the read instruction signal R, and are input to a flip-flop (hereinafter described as FF) 111.

Furthermore, data in correspondence with the second extension address are read out from the memory device 4 based on the second extension read address A2, and are input to a FF 113. The data output from the FF 111 are adjusted in the phase in a FF 112 based on the clock.

Incidentally, the data in correspondence with the first extension address A1 are ones stored in the Win-A region of Fig. 8. On the other hand, the data in correspondence with the second extension address A2 are the parity and code stored in the Win-B region of Fig. 8.

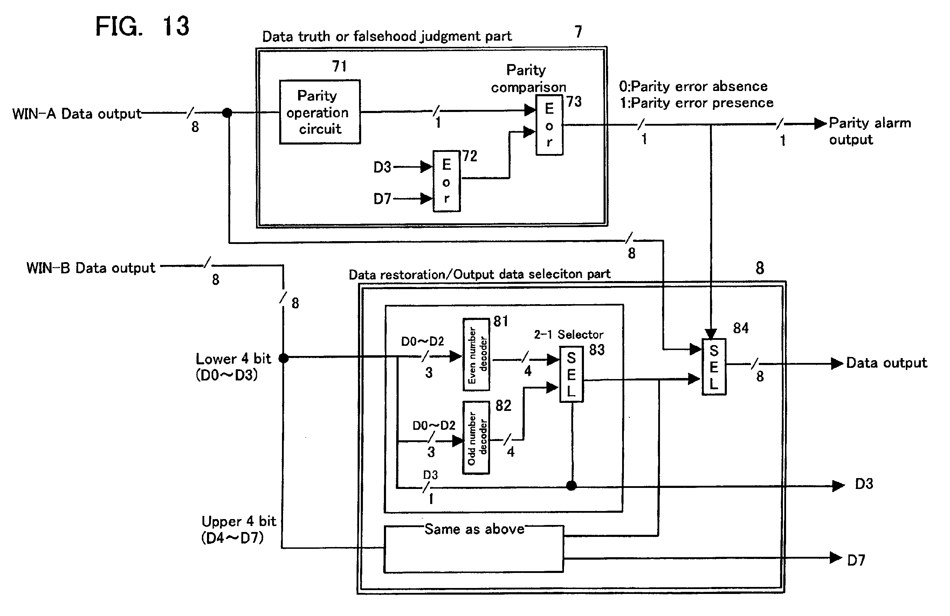

Fig. 13 is a block diagram of configuration examples of the data truth or falsehood judgement part 7 and the data restoration/output data selection part 8. The data truth or falsehood judgement part 7 makes a parity check in data read out from the Win-A region in correspondence with the first extension read address. On the other hand, the data restoration/output data selection part 8 restores the codes read out from the Win-B region in correspondence with the second extension read address, and performs a data output processing based on the results of the parity check.

A vertical parity operation is made with respect to the data read out from the first extension read address (WIN-A region) by a parity operation circuit 71 of the data truth or falsehood judgment part 7. The results are input into a parity comparison circuit 73.

Data (referred to as "code data") containing a parity/code value read out from the second extension read address (WIN-B region) are input into the data restoration/output data selection part 8.

The data restoration/output data selection part 8 has a first circuit for upper 4 bits of the code data and a second circuit of the same configuration as in the first circuit for the upper 4 bits. In the first circuit, D0 to D2 out of lower 4 bits of the code data are input to an even number decoder 81 and an odd number decoder 82, respectively.

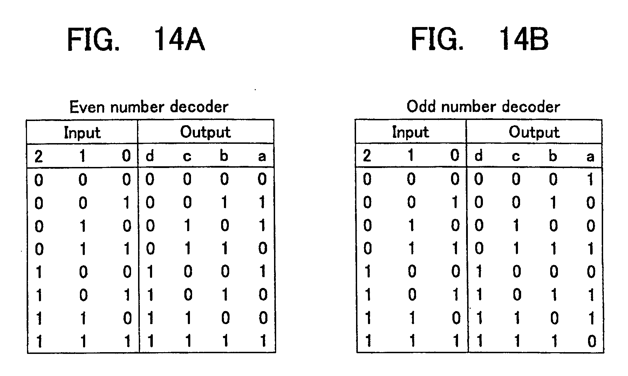

They are restored to the original input data according to the table shown in Figs. 14A,14B explaining the even number/odd number decoders. Fig. 14A is a conversion table for the even number decoder 81. Fig. 14B is a conversion table for the odd number decoder 82. Outputs of the even number decoder 81 and the odd number decoder 82 are input into a selector 83.

Here, as explained in Fig. 7, as the parity information PA is affixed at the lower 4-bit-th address to the read-out code data, when the PA is "0," designated as the even-numbered parity. On the other hand, when the parity information PA is "1," designated as the odd-numbered parity.

The selector 83 is a selection circuit for selecting any one of 2 inputs, and selects data which are controlled by the parity information PA and are restored from the even number decoder 81, and data restored from the odd number decoder 82, and outputs the restored lower 4-bit data.

Furthermore, the information of PA (D3) is output also to the data truth or falsehood judgment part 7.

Similarly, the same processing is performed in the upper 4-bit D4 to D7, and the restored upper 4-bit data and information of PB (D7) are output.

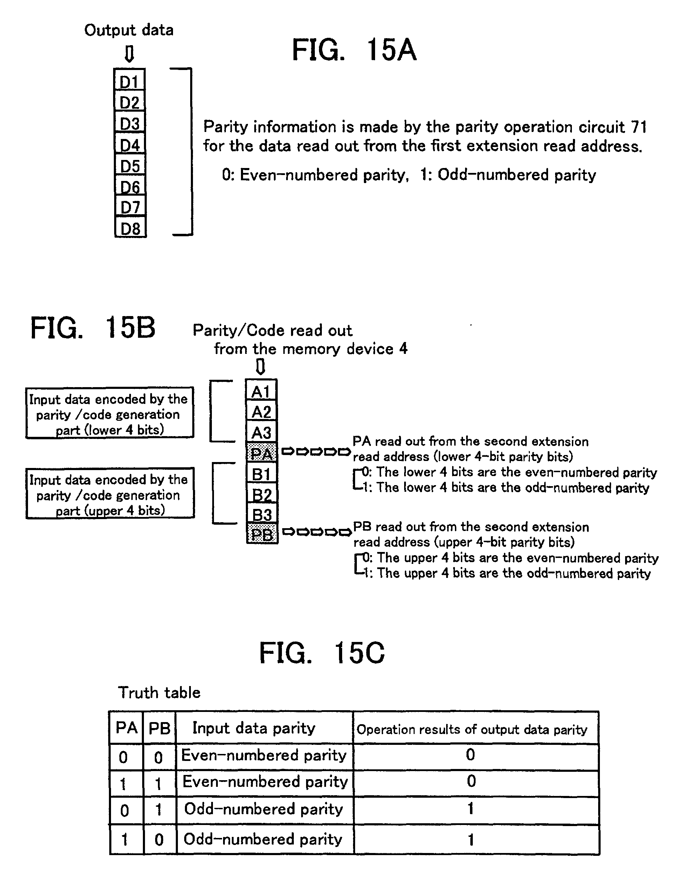

The parity information of PA (D3) and PB (D7) output from the data restoration/output data selection part 8 is input into an exclusive OR circuit (Eor) 72 of the data truth or falsehood judgment part 7. Here, in an algorithm shown in Fig. 15A-15C, it is judged whether the input data are the even-numbered parity or the odd-numbered parity from the information of PA (D3) and PB (D7) bits as the parity information.

That is, Fig. 15A explains that the parity information is made by the parity operation circuit 71 for the data read out from the first extension read address of the memory device 4. When the operation results are 0, the even-numbered parity, and when the operation results are 1, the odd-numbered parity.

Fig. 15B is code data read out from the second extension read address of the memory device 4, and indicates the lower 4 bits A1 to A3 and PA, and the upper 4 bits B1 to B3 and PB of the input data encoded by the parity/code generation part 1.

In Fig. 15B, the PA is lower 4-bit parity bits read out from the second extension read address, and when 0, the lower 4 bits are the even-numbered parity, and when 1, the lower 4 bits are the odd-numbered parity. The PB is upper 4-bit parity bits read out from the second extension read address, and when 0, the lower 4 bits are the even-numbered parity, and when 1, the lower 4 bits are the odd-numbered parity.

Therefore, the exclusive OR circuit 72 inputs the PA and PB and outputs according to a truth table shown in Fig. 15C. That is, when the PA and PB are both 0 or 1, the input data are the even-numbered parity, and when either the PA or PB is 1, the input data are the odd-numbered parity.

On the other hand, the parity of output data read out from the first extension read address A1 is calculated in the parity operation circuit 71. Accordingly, the output of the parity operation circuit 71 is compared with the output of the exclusive OR circuit 72 in the parity comparison circuit 73 configured by the exclusive OR circuit.

In this comparison, according to the truth table of Fig. 15C, when the operation results of the parity of the input data coincide with those of the parity of the output data, parity error absence "0" is output, and when non-coinciding with each other, the parity error presence "1" is output.

In the case where the parity error presence "1" is detected in the data truth or falsehood judgment part 7, a selector 84 of the data restoration/output data selection part 8 is controlled by the output of the parity error presence "1" of the data truth or falsehood judgment part 7. Thus, the selector 84 selects and outputs the data restored. Accordingly, a lack of data due to faults of the memory device 4 can be relieved.

On the other hand, in the case where the parity error is not detected in the data truth or falsehood judgment part 7, it is judged that the data read out from the first extension read address of the memory device 4 are normal, the data are output as it stands.

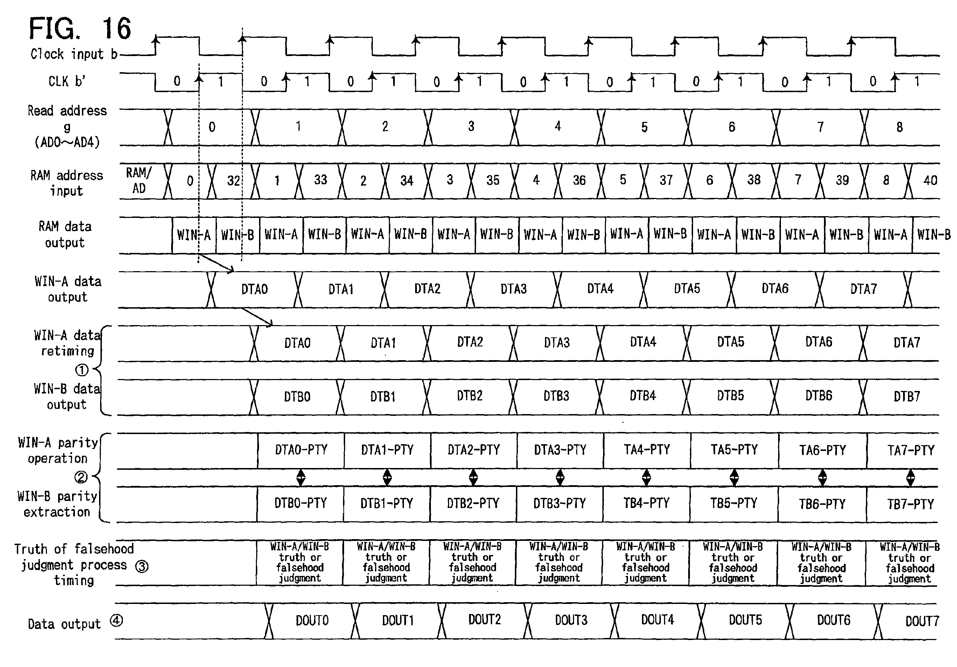

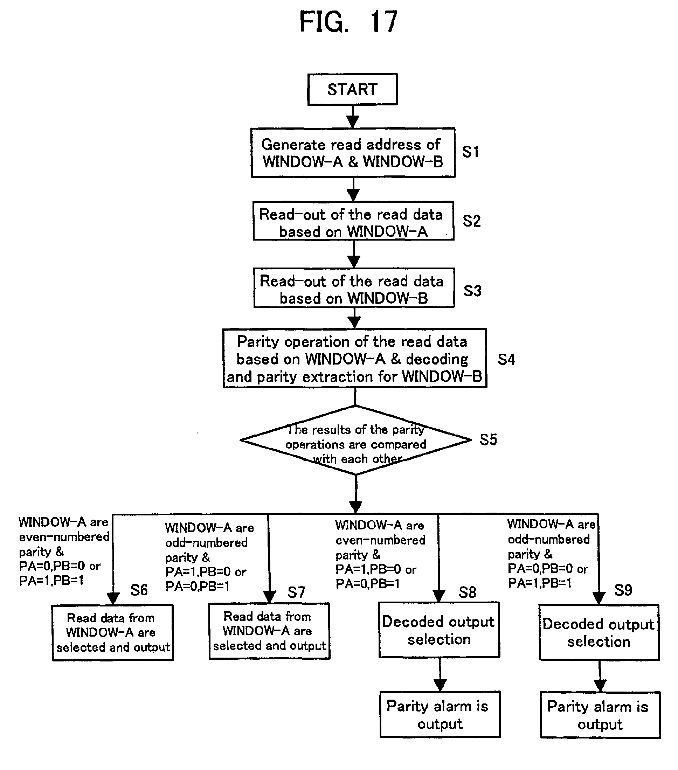

Fig. 16 is a timing chart of the read-out circuit of Fig. 13 according to the embodiment of the present invention. Fig. 17 is an operational flowchart in correspondence with Fig. 16.

The first and second extension read addresses are generated based on the read-out address g, thereby setting as an address RAM/AD for the memory device 4 (step S1). The read-out of the first read data based on the WINDOW-A (the first extension read address) generated by building in when the clock b is high is made according to the clock b (step S2).

The read-out of the second read data based on the WINDOW-B (the second extension read address) generated by building in when the clock b is low is made according to a CLKb' signal having an inverted clock (step S3).

The read-out data of WINDOW-A and WINDOW-B are adjusted in the phases, and the first and second read data are read out at a same timing (refer to ① of Fig. 16). Next, the parity operations are made, respectively (step 4: refer to ② of Fig. 16).

The results of the parity operations are compared with each other (step S5: refer to ③ of Fig. 16). Based on the results of this comparison, a truth or falsehood judgment of correct read-out data is made. According to the results of the truth or falsehood judgment, the output is selected (steps S6 to S9: refer to ④ of Fig. 16).

In Fig. 17, the details of steps S6 to S9 will be explained as follows: In the case where the first read data from the WINDOW-A (the first extension read address) are the even-numbered parity, and the parity information PA, PB of the second read data from the WINDOW-B (the second extension read address) are 0, 0 or 1, 1, the first read data from the WINDOW-A (the first extension read address) are selected and output (step S6).

In the case where the first read data from the WINDOW-A (the first extension read address) are the odd-numbered parity, and the parity information PA, PB of the second read data from the WINDOW-B (the second extension read address) are 1, 0 or 0, 1, the first read data from the WINDOW-A (the first extension read address) are selected and output (step S7).

In the case where the first read data from the WINDOW-A (the first extension read address) are the even-numbered parity, and the parity information PA, PB of the second read data from the WINDOW-B (the second extension read address) are 1, 0 or 0, 1, the data restored based on the second read data from the WINDOW-B (the second extension read address) are selected and output, and also a parity alarm is output (step S8).

In the case where the first read data from the WINDOW-A (the first extension read address) are the odd-numbered parity, and the parity information PA, PB of the second read data from the WINDOW-B (the second extension read address) are 0, 0 or 1, 1 also, the data restored based on the second read data from the WINDOW-B (the second extension read address) are selected and output, and also the parity alarm is output (step S9).

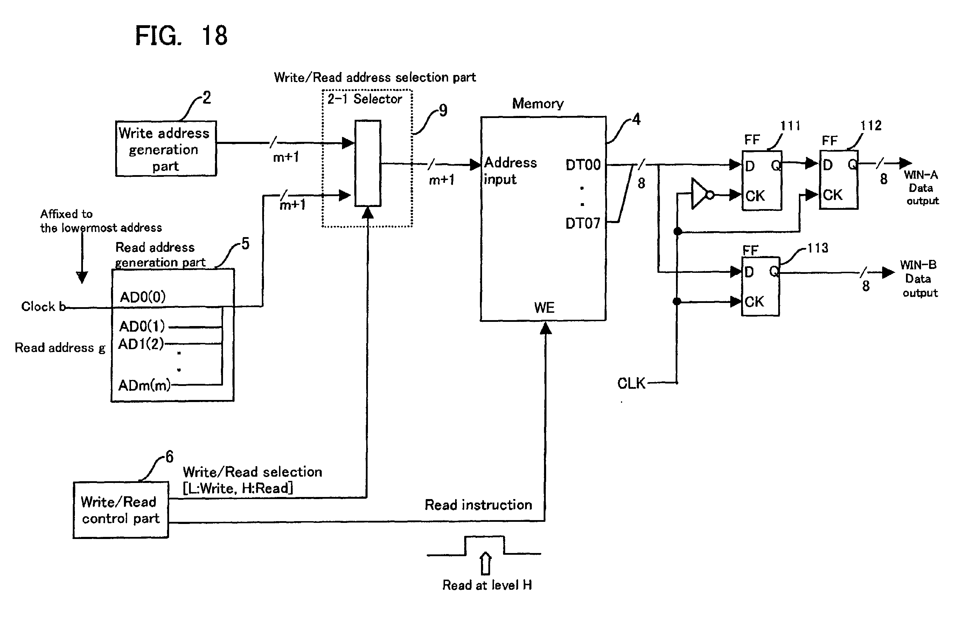

Fig. 18 is a block diagram of the read-out circuit according to a still another embodiment of the present invention. This embodiment has a configuration of the read-out circuit in correspondence with the embodiment of the write circuit of Fig. 10. This embodiment differs from the block diagram of the read-out circuit according to the embodiment of Fig. 12 in that, in the read-out address generation part 5, the clock b is affixed to the lowermost bits of the read-out address.

In Fig. 18, the write/read address selection part 9 selects the output of the read-out address generation part 5 and the output of the write address generation part 2 shown in Fig. 10 in accordance with the output of the write/read control part 6 to output.

In this selection of the selector 9, in the case where the output of the write/read control part 6 is low, an address output from the write address generation part 2 is made as validity, and in the case where high, the extension read-out address as the output of the read-out address generation part 5 is output as validity.

The read-out address generation part 5 affixes the clock b to the lowermost bit of the read-out address g, and generates the first extension read address when the clock b is low, and generates the second extension read address when the clock b is high.

The first read data are read out in accordance with the WINDOW-A (the first extension read address) from the FF 111 based on the first extension read address according to the read instruction R, and the second read data are read out from the FF 113 based on the WINDOW-B (the second extension read address). The first read data are adjusted in the phases by the FF 112 and are output in synchronism with the output of the FF113.

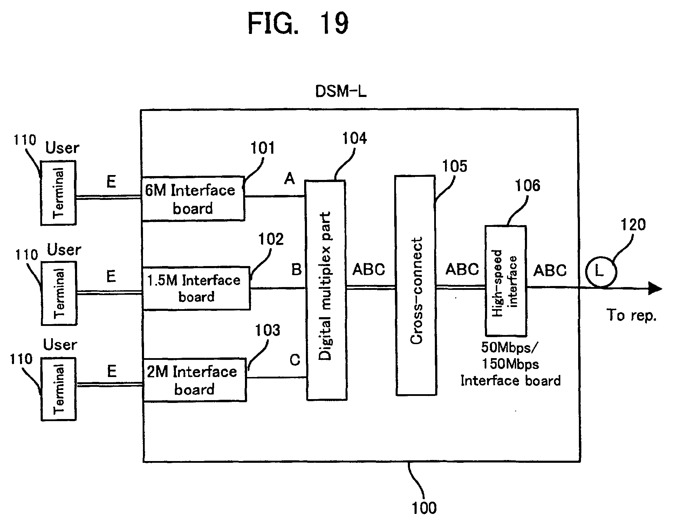

Here, an example in which the present invention is applied to the memory apparatus will be described. Fig. 19 is a block diagram showing a schematic configuration of a large capacitance dedicated cross-connector 100. In the apparatus shown in Fig. 19, respective tandem digital signals of 6 Mbps, 1.5 Mbps, and 2 Mbps are received by interface boards 101 to 103 in correspondence therewith.

Outputs of the interface boards 101 to 103 are multiplexed by a digital multiplex conversion part 105. A signal multiplexed by the digital multiplex conversion part 105 is bit-converted (cross-connected) in 64K bit unit in the cross-connection part 105.

The cross-connected signal is read out and converted to a high-speed optical signal of 50 Mbps, or 150 Mbps in a high-speed interface circuit 106, and is supplied to an optical transmission path 120.

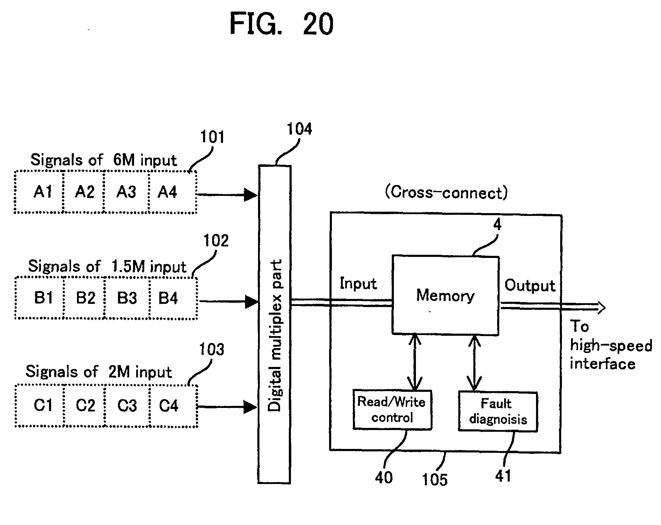

The memory apparatus of the present invention can be applied to the cross-connection part 105 of such the large capacitance dedicated cross-connector 100. Namely, as shown in Fig. 20, the cross-connection part 105 comprises a read/write control circuit 40 configured by the write circuit shown in Fig. 1 and the read circuit shown in Fig. 2, and also the memory device 4, thereby constituting the cross-connection part 105.

Incidentally, in Fig. 20, the cross-connection part 105 has a fault diagnosis circuit 41, and as shown in Fig. 2, receives memory fault information from the data truth or falsehood judgment part 7 in the read-out circuit.

Now, as shown in the embodiment of Fig. 20, signals of 6M are input into the respective interface boards 101 to 103 in the bit order of A1 to A4, and signals of 1.5M in the bit order of B1 to B4, and signals of 2M in the bit order of C1 to C4.

A digital multiplex part 104 fetches in the order of A, B, and C bits, and outputs to the bit string of parallel A, B, and C to multiplex. The multiplexing output of the digital multiplex part 104 is written in the memory device 4.

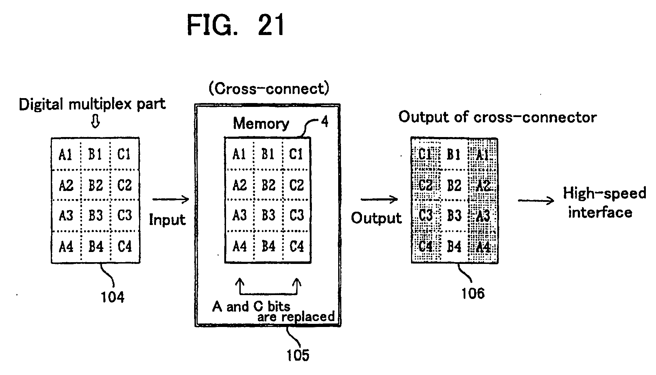

The signals 104 multiplexed by the write/read control circuit 40 are stored in the order of the A, B, and C bits shown in Fig. 21 in the memory device 4. Accordingly, the read address is replaced by the write/read control circuit 40, thereby reading the output 106 of the cross-connector in which the A and C bits are replaced.

In this manner, the memory apparatus according to the present invention can be applied to the cross-connection part 105 of the cross-connector.

### INDUSTRIAL APPLICABILITY

As set forth hereinabove in accordance with the embodiments, the present invention eliminates the need to separately provide the memory storing the parity operation results therein and enables the apparatus mounting area, consumption power and costs to be reduced.

Furthermore, the input data are encoded, and the data (codes) different from the input data are written by use of the extension address, so that, even when the parity error due to a lack, etc. of the input data generates, the input data can be relieved.

Thus, the memory apparatus having a high data transmission reliability is provided.

It will be appreciated that the drawings and the embodiments of the present invention are presented only for the understanding of the present invention and that the scope of protection of the present invention is not limited thereto. The scope of protection of the present invention is defined by the claims, and modifications within the scope equivalent to the description of claims are to be included in the scope of protection of the present invention.

## Claims

1. A memory fault diagnosis and data restoration method comprising the steps of:
making a parity operation of input data;
encoding the input data in a predetermined correlation;
storing the input data in a first address of one memory;
storing the results of the parity operation of the input data, and the encoded data in a second address of the one memory;
reading the data stored in the first address and making the parity operation of the read-out data;
comparing the results of the parity operation of the read-out data with the results of the parity operation of the input data, stored in the second address;
when coincidence occurs as a result of the comparison, outputting the data read-out from the first address as valid; and
when non-coincidence occurs as a result of the comparison, decoding the encoded data read-out from the second address for output.

2. The memory fault diagnosis and data restoration method according to claim 1, wherein
the first address is configured by combining a predetermined bit count of address with one polarity bit of one clock, and the second address is configured by combining the predetermined bit count of address with a polarity bit counter to the one polarity of the one clock.

3. The memory fault diagnosis and data restoration method according to claim 2, wherein
the one polarity bit of the one clock and the polarity bit counter to the first polarity of the one clock in combination with the predetermined bit count of address are affixed to the uppermost bit of the predetermined bit count of address.

4. The memory fault diagnosis and data restoration method according to claim 2, wherein
the one polarity bit of the one clock and the polarity bit counter to the first polarity of the one clock in combination with the predetermined bit count of address are affixed to the lowermost bit of the predetermined bit count of address.

5. The memory fault diagnosis and data restoration method according to claim 1, wherein
the step of encoding the input data in a predetermined correlation includes selecting an even-numbered parity group or an odd-numbered parity group, of code patterns corresponding to the bit count making up the input data, depending on the results of the parity operation of the input data.

6. The memory fault diagnosis and data restoration method according to claim 1, wherein
the step of encoding the input data in a predetermined correlation includes selecting, for each upper half bit count and each lower half bit count of a bit count making up the input data, an even-numbered parity group or an odd-numbered parity group of corresponding code patterns in correspondence with the results of each parity operation of the upper half bit count and the lower half bit count, the step of encoding the input data further including combining the code patterns in correspondence with each of the upper half bit count selected and the lower half bit count selected.

7. A memory apparatus, comprising:
means for making a parity operation of input data;
means for encoding the input data in a predetermined correlation;
one memory storing the input data in a first address and storing results of the parity operation of the input data and the encoded data in a second address;
means for reading the data stored in the first address and making the parity operation of the read-out data;
means for comparing the results of the parity operation of the read-out data with the results of the parity operation of the input data, stored in the second address; and
means for when coincidence occurs as a result of the comparison, outputting the data read-out from the first address as valid, and when non-coincidence occurs as a result of the comparison, decoding the encoded data read-out from the second address for output.

8. The memory apparatus according to claim 7, wherein
the first address is configured by combining a predetermined bit count of address with one polarity bit of one clock, the second address being configured by combining the predetermined bit count of address with a polarity bit counter to the one polarity of the one clock.

9. The memory apparatus according to claim 8, wherein
the one polarity bit of the one clock and the polarity bit counter to the first polarity of the one clock in combination with the predetermined bit count of address are affixed to the uppermost bit of the predetermined bit count of address.

10. The memory apparatus according to claim 8, wherein
the one polarity bit of the one clock and the polarity bit counter to the first polarity of the one clock in combination with the predetermined bit count of address are affixed to the lowermost bit of the predetermined bit count of address.

11. The memory apparatus according to claim 7, wherein
the means of encoding the input data in a predetermined correlation selects an even-numbered parity group or an, odd-numbered parity group, of code patterns in correspondence with a bit count making up the input data, depending on the results of the parity operation of the input data.

12. The memory apparatus according to claim 7, wherein
the means of encoding the input data in a predetermined correlation selects, for each upper half bit count and each lower half bit count of a bit count making up the input data, an even-numbered parity group or an odd-numbered parity group, of corresponding code patterns, depending on the results of each parity operation of the upper half bit count and the lower half bit count, and further combines code patterns in correspondence with each of the upper half bit count selected and the lower half bit count selected.

13. The memory apparatus according to claim 7, wherein
the one memory includes a common data input terminal to which are fed input data stored in the first address, the results of the parity operation of the input data, stored in the second address, and the encoded data.
